# FASCICULE DE BREVET EUROPEEN

(11) **EP 1 567 383 B1**
(45) Date de publication et mention de la délivrance du brevet: **05.03.2008**
(21) Numéro de dépôt: 03767919.8
(22) Date de dépôt: 03.10.2003
(51) Int. Cl.: B60K 6/28, B60W 20/00, B60L 11/18, H02J 7/02, H02J 7/04

(54) **VEHICULE A TRACTION HYBRIDE COMPORTANT UN DISPOSITIF DE COMMANDE DE LA CHARGE DE LA BATTERIE**
HYBRIDKRAFTFAHRZEUG MIT STEUERUNGSVORRICHTUNG ZUM LADEN DER BATTERIE
HYBRID ELECTRIC VEHICLE COMPRISING A BATTERY CHARGING CONTROL DEVICE

(30) Priorité: 27.11.2002 FR 0214853
(43) Date de publication de la demande: 31.08.2005
(73) Titulaire: Peugeot Citroën Automobiles S.A., 78140 Vélizy Villacoublay (FR)
(72) Inventeur: LOUBEYRE, Yves, F-92380 GARCHES (FR)
(74) Mandataire: Grynwald, Albert
(86) Numéro de dépôt international: PCT/FR2003/050079
(87) Numéro de publication internationale: WO 2004/050411

(56) Documents cités:
- EP-A- 0 224 144
- EP-A- 0 566 320
- EP-A- 0 834 977
- EP-A- 1 201 485
- DE-A- 4 324 010
- US-A- 5 341 075
- "CITROEN XSARA DYNACTIVE: A NOUVEAU SIECLE, NOUVELLE TECHNOLOGIE" REVUE TECHNIQUE AUTOMOBILE, ETAI. BOULOGNE-BILLANCOURT, FR, vol. 55, no. 632, octobre 2000 (2000-10), pages 44-45, XP000968273 ISSN: 0017-307X
- F. BADIN, B. JEANNERET, R. TRIGUI, F. HAREL: ""Hybrid Vehicles, should we plug them to the grid or not?"" THE 18TH INTERNATIONAL ELECTRIC VEHICLES SYMPOSIUM, [Online] 24 octobre 2001 (2001-10-24), XP002247687 21-24 October 2001 Berlin (De) Extrait de l'Internet: URL:www.inrets.fr/ur/lte/publications/publ ications-pdf/Veh2-publi/BADIN-EVS18.pdf> [extrait le 2003-07-15]

## Description

L'invention est relative à un véhicule automobile à traction hybride.

On sait que les véhicules automobiles à traction électrique ne sont utilisés que pour des parcours sur des distances réduites en raison de l'autonomie limitée des batteries et de la durée de charge d'une batterie.

L'invention permet l'utilisation d'un véhicule automobile à traction électrique sur de longs parcours.

Le véhicule à traction électrique conforme à l'invention est caractérisé en ce qu'il comporte des moyens pour charger la batterie par une source d'énergie électrique externe au véhicule d'une puissance permettant une charge rapide, par exemple de l'ordre d'une dizaine de minutes.

Les sources d'énergie électrique externes au véhicule peuvent être installées dans les « stations service » de distribution de carburant pour les véhicules à moteur thermique ou hybride. La durée de charge peut être du même ordre de grandeur que la durée d'arrêt d'un véhicule à moteur thermique à la station pour remplir le réservoir de carburant.

L'invention est utile non seulement pour les véhicules à traction purement électrique mais aussi dans le cas de véhicules à traction hybride dans lesquels l'utilisateur peut choisir à volonté le mode de traction. En effet, dans certains cas, l'utilisateur peut privilégier la traction électrique, notamment pour les parcours urbains ou d'autres zones pour lesquelles les gaz d'échappement peuvent être nocifs et, dans ces situations, l'utilisateur dispose grâce à l'invention de moyens pour charger la batterie sans avoir à faire fonctionner le moteur thermique.

On rappelle ici qu'un véhicule à traction hybride comporte, d'une part,un moteur thermique classique et, d'autre part, un moteur électrique alimenté par une batterie d'accumulateurs. La batterie est chargée lorsque le véhicule est entraîné par le moteur thermique. Dans ce cas, le moteur thermique entraîne le moteur électrique qui fonctionne alors en générateur et charge la batterie.

Un tel véhicule comporte un moyen de gestion automatique de la traction qui donne la priorité à la traction électrique lorsque la batterie est suffisamment chargée et au moteur thermique au-delà d'une vitesse déterminée. Par contre, lorsque l'état de charge de la batterie n'est pas suffisant, le moteur thermique est systématiquement mis en route pour, d'une part, assurer la traction et, d'autre part, charger la batterie.

On rappelle aussi qu'il a déjà été prévu un moyen de gestion du mode de traction pour véhicules hybrides qui comporte un moyen de commutation actionnable par le conducteur lui permettant de choisir entre un mode de gestion de type automatique et un mode de gestion de type manuel offrant le choix entre le mode de traction par le moteur thermique et le mode de traction par le moteur électrique.

C'est la présence d'un tel moyen de commutation qui permet au conducteur de privilégier la traction électrique.

Étant donné qu'un réseau d'alimentation en énergie électrique, par exemple triphasé 380 volts, d'une puissance suffisante pour obtenir une charge rapide de la batterie du véhicule électrique ou hybride n'est pas forcément disponible partout, dans un mode de réalisation préféré, le véhicule comporte en outre des moyens pour que la charge puisse être effectuée selon une seconde puissance, sensiblement inférieure à la première. Ainsi, la charge peut être réalisée à domicile pendant une durée de l'ordre d'une heure dans le cas d'un véhicule hybride.

Ces moyens de charge sont, par exemple, tels qu'ils permettent la charge par un réseau monophasé, notamment de tension 220 volts.

Dans une réalisation, le véhicule électrique ou hybride est tel que les moyens pour charger la batterie à l'aide d'une source externe comportent des moyens de filtrage pour isoler la source des parasites électromagnétiques engendrés à bord du véhicule.

Les moyens pour charger la batterie à l'aide d'une source externe peuvent comporter des moyens d'équilibrage des phases de la source d'alimentation.

Selon une réalisation, le véhicule comporte un commutateur présentant une première position pour laquelle la machine électrique est connectée à l'alimentation à batterie et une seconde position pour laquelle la batterie est reliée à une source externe de charge, la connexion du moteur à la batterie étant alors interrompue, ce commutateur étant solidaire d'une prise électrique se trouvant dans le véhicule et destinée à coopérer avec une prise complémentaire d'un réseau, ce commutateur prenant automatiquement la seconde position quand la prise électrique du véhicule coopère avec la prise complémentaire du réseau.

Dans le cas d'un véhicule hybride, dans une réalisation, on prévoit que les moyens pour charger la batterie comportent un moyen fonctionnant en redresseur pour la charge et fonctionnant en onduleur quand la machine fonctionne en moteur alimenté par la batterie.

Un véhicule hybride comporte, par exemple, un commutateur à actionnement automatique à deux positions présentant une première position pour laquelle la machine électrique est connectée à l'alimentation à batterie et une seconde position pour laquelle la batterie est reliée à une source externe de charge, la connexion du moteur à la batterie étant alors interrompue.

Les documents génériques EP0834977 et EP1201485 décrivent un véhicule hybride comportant une batterie apte à être rechargée par une source extérieure. Toutefois ces documents ne décrivent pas, ni ne suggèrent, l'utilisation d'un commutateur qui interrompt la connexion du moteur à la batterie lorsqu'il relie la batterie à une source externe de charge.

Dans le cas d'un véhicule hybride comportant un dispositif de commande à moyen de calcul pour déterminer automatiquement le mode de traction, à moteur thermique et/ou à moteur électrique, en fonction de l'état de charge de la batterie et du couple demandé au véhicule, ce dispositif de commande comportant un moyen supplémentaire de commande actionnable de l'intérieur du véhicule afin de permettre le choix à volonté du mode de traction, le moyen supplémentaire de commande est, par exemple, relié au moyen de calcul.

D'autres caractéristiques et avantages de l'invention apparaîtront avec la description de certains de ses modes de réalisation, celle-ci étant effectuée en se référant aux dessins ci-annexés sur lesquels :
La figure 1 est un schéma de principe d'un véhicule connu de type hybride,
la figure 2 est un schéma montrant des moyens de commande d'un véhicule hybride,
la figure 3 est un schéma d'un mode de réalisation de l'invention,
la figure 4 est un schéma analogue à celui de la figure 3, mais pour une variante,
la figure 5 est un schéma d'un circuit de charge pour une variante de la réalisation montrée sur la figure 3,
la figure 6 est un schéma d'un onduleur pour véhicule hybride,
la figure 7 est un schéma correspondant à l'exemple de la figure 4, et
la figure 8 est un schéma correspondant à une variante de l'exemple montré sur la figure 7.

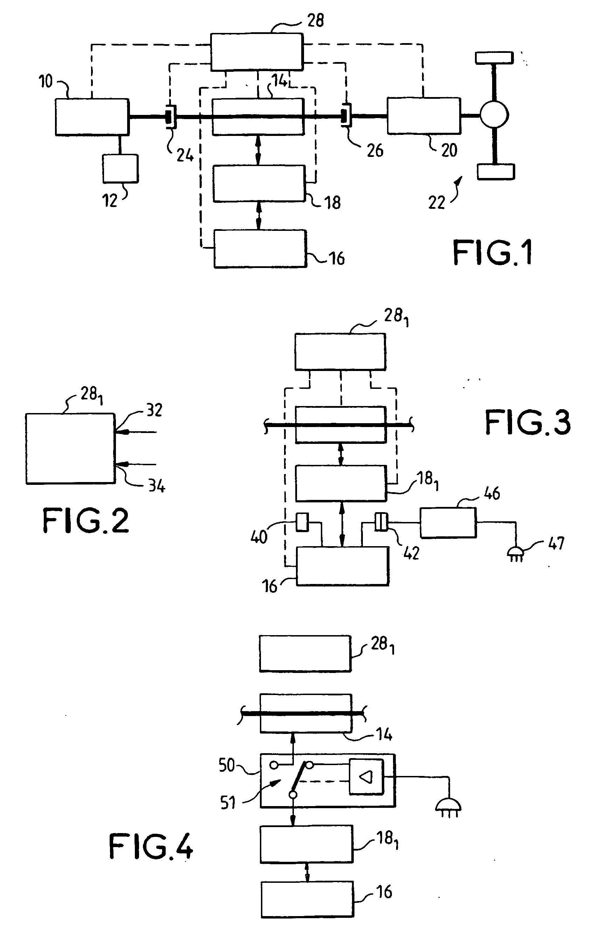

La figure 1 représente le principe d'un véhicule hybride connu auquel s'applique l'invention.

Un tel véhicule hybride comporte un moteur thermique 10 classique, avec un réservoir de carburant 12. Le moteur thermique 10 est couplé à une machine électrique 14 constituant, d'une part, le moteur de traction électrique du véhicule et, d'autre part, un générateur pour charger la batterie.

La machine électrique 14 est reliée à une batterie 16 par l'intermédiaire d'un circuit électronique 18 de puissance qui permet, d'une part, le transfert d'énergie de la batterie 16 vers la machine 14 fonctionnant en moteur, et d'autre part, inversement, la charge de la batterie quand la machine 14 fonctionne en générateur.

L'arbre de la machine électrique peut être couplé directement à l'arbre du moteur thermique et l'arbre de cette machine électrique 14 (ou l'arbre du moteur thermique) peut être connecté directement à une transmission 20 pour l'entraînement des roues 22, cette transmission étant par exemple une boîte de vitesse manuelle ou automatique.

Il est aussi possible de prévoir des embrayages 24 et 26 pour permettre l'accouplement de l'arbre du moteur thermique à l'arbre du moteur électrique et le désaccouplement de l'arbre du moteur électrique de l'arbre de transmission.

Par exemple, l'arbre du moteur thermique est couplé à l'arbre du moteur électrique en mode de traction électrique quand c'est l'arbre du moteur thermique qui entraîne des accessoires tels que le conditionnement d'air du véhicule. Dans le cas où l'on prévoit un embrayage 24, on peut désaccoupler l'arbre du moteur électrique de l'arbre du moteur thermique quand la batterie est faiblement chargée ou au démarrage du véhicule, en mode de traction thermique ou électrique.

Pour la commande de l'ensemble de ces éléments, on prévoit des moyens de calcul 28 comprenant un ou plusieurs calculateurs.

Ainsi, ces moyens de calcul 28 commandent le moteur thermique 10, la machine électrique 14, le circuit 18, les embrayages 24 et 26 ainsi que la transmission 20. Ces moyens de calcul sont également connectés à la batterie 16 pour recevoir des signaux de cette dernière, tels que la profondeur de décharge ou sa température.

Les moyens de calcul permettent notamment la gestion du mode de traction pour que le véhicule fonctionne en traction électrique quand la batterie est suffisamment chargée et en traction par le moteur thermique 10 quand la charge de la batterie devient insuffisante et pour, dans ce cas, charger la batterie.

Pour la traction à vitesse élevée, le moyen de calcul accorde la priorité à la traction par le moteur thermique, le moteur électrique pouvant cependant intervenir en cas de besoin, notamment en phase d'accélération pour fournir un complément de couple.

L'invention prévoit que le moyen de calcul 28₁ (figure 2) soit programmé pour permettre de désactiver à volonté la gestion automatique du mode de traction, le conducteur pouvant alors choisir de privilégier soit la traction électrique, soit la traction thermique. Ainsi, le conducteur dispose de deux boutons de commande (non montrés), l'un pour commander le véhicule uniquement en traction électrique et l'autre pour commander le véhicule uniquement en traction thermique.

Ces deux boutons envoient des impulsions sur des entrées, respectivement 32 et 34, du moyen de calcul 28₁. Une impulsion sur l'entrée 32 se traduit par une traction uniquement par le moteur électrique et une impulsion sur l'entrée 34 se traduit par une traction uniquement de type thermique.

Selon un second aspect de l'invention, qui peut s'utiliser indépendamment du premier aspect, ou en combinaison avec ce dernier, on prévoit, dans le véhicule hybride, des moyens permettant de charger la batterie à l'aide d'un réseau externe d'alimentation en énergie électrique.

On prévoit, par exemple, des moyens permettant la charge de la batterie soit à l'aide d'un réseau triphasé de tension 380 volts soit à l'aide d'un réseau monophasé de tension 220 volts.

Dans l'exemple représenté sur la figure 3, le véhicule hybride comporte des connecteurs 40 et 42 reliés à la batterie et permettant de coopérer avec des moyens externes de recharge. Ainsi, le connecteur 40 est destiné à coopérer avec un connecteur complémentaire de moyens externes de charge de grande puissance, par exemple se trouvant dans une station service pour la recharge en triphasé 380 volts, tandis que le connecteur 42 est destiné à être relié, par l'intermédiaire d'une simple prise de courant 47, à des moyens externes de recharge 46 alimentés en courant biphasé ou monophasé classique 220 volts.

Dans l'exemple représenté sur la figure 4, la charge de très grande puissance, ou charge rapide, s'effectue par l'intermédiaire du circuit 18₁ à bord du véhicule hybride à l'entrée duquel on prévoit, également à bord du véhicule, un ensemble 50 à commutateur qui, par ailleurs, est connecté à la machine 14.

L'ensemble 50 permet, avec le circuit 18₁, une charge de forte puissance. Il est du type monophasé ou triphasé et assure, d'une part, l'isolation entre le circuit 18₁ et la machine 14 et, d'autre part, par filtrage, la protection du réseau d'alimentation contre les perturbations électromagnétiques qui pourraient provenir du véhicule. L'ensemble 50 permet aussi de maintenir l'équilibre des phases du réseau.

Dans une variante, l'ensemble 50 se trouve, au moins en partie, à l'extérieur du véhicule, par exemple dans une station de distribution d'énergie.

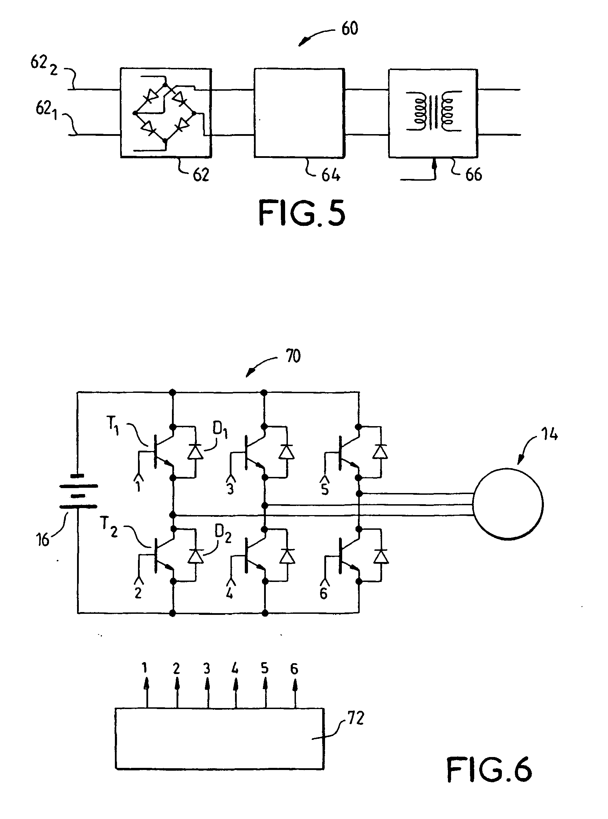

On a représenté sur la figure 5, un mode de réalisation d'un chargeur de faible puissance destiné à être installé à bord du véhicule, alors que le chargeur 46 de l'exemple de la figure 3 n'est pas intégré au véhicule.

Dans cette réalisation, le circuit 60 de recharge lente comporte, d'une part, un redresseur 62 à pont de diodes pour transformer en tension continue la tension monophasée 220 volts, 16 ampères appliquée à l'entrée 62. La sortie du redresseur 62 est appliquée sur les entrées 62₁ et 62₂ d'un circuit 64 de filtrage et de « boost » de la tension, la fonction « boost » permettant de réaliser une correction du facteur de puissance, c'est-à-dire une modulation du courant en fonction de la tension présente sur le réseau.

Ce circuit 64 est connecté à l'entrée d'un circuit 66 qui module le courant de charge et assure l'isolation galvanique, ce circuit 66 étant connecté aux bornes de la batterie à charger. Le circuit 66 comporte aussi des moyens classiques de régulation du courant de charge pilotés par les moyens de calcul (non montrés sur la figure 5).

Dans la réalisation représentée sur la figure 6, la machine 14 est du type triphasé. Ainsi, la batterie 16 est reliée au moteur par l'intermédiaire d'un onduleur 70 comportant, dans l'exemple, six couples de transistors T₁ et de diodes D₁, la base de chaque transistor étant commandée par une électronique 72 faisant partie des moyens de calcul. La commande des transistors est telle que, lorsque le véhicule est en traction électrique ou en traction mixte, le courant fourni par la batterie est transformé en un courant triphasé alternatif alimentant le moteur 14 et, lorsque la machine 14 fonctionne en génératrice pour charger la batterie 16, les transistors T₁ et les diodes D₁ forment un pont redresseur pour délivrer un courant continu de charge à la batterie.

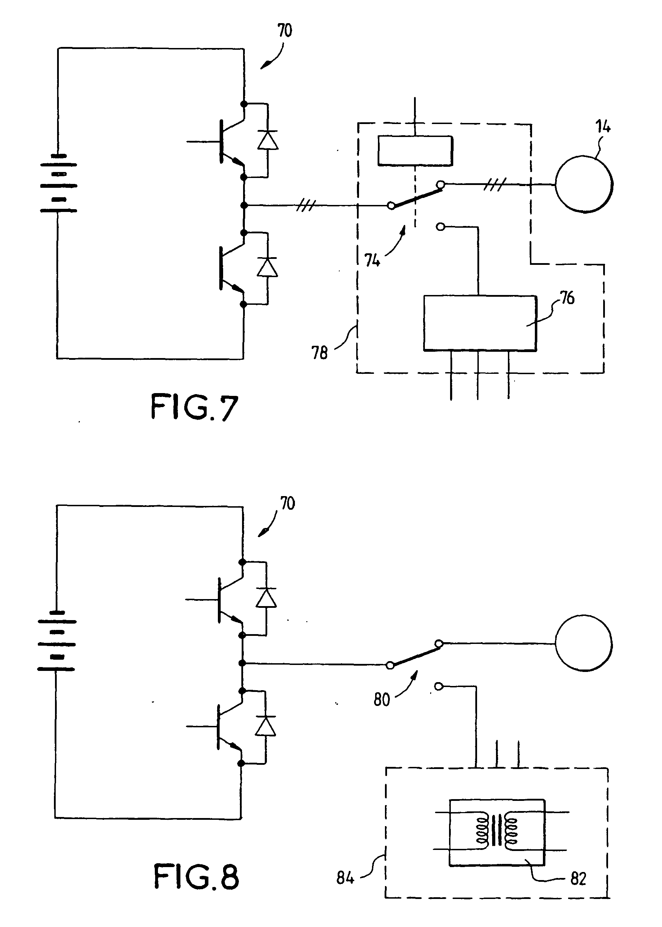

La figure 7 est un schéma d'un exemple de réalisation d'alimentation triphasée de forte puissance pour une recharge rapide du type de celle montrée sur la figure 4 et faisant appel à l'onduleur 70 représenté sur la figure 6. Dans cet exemple, le commutateur 74 et le filtre 76 protégeant le réseau triphasé externe d'alimentation contre les parasites électromagnétiques engendrés à bord du véhicule, se trouvent dans une ensemble 78 intégré au véhicule.

Le commutateur 74 est commandé de façon automatique par les moyens de calcul. Ainsi, dans la position du commutateur représentée sur la figure 7, la machine 14 est connectée à l'alimentation à batterie et à l'ensemble à transistors et diodes quand la clé de contact du véhicule est en position de marche. Quand la clé de contact est en position d'arrêt, le commutateur 74 est dans l'autre position, prêt à la recharge.

Dans l'exemple représenté sur la figure 8, le commutateur 80 est à commande mécanique. Il se trouve par exemple dans la prise électrique du véhicule et se met dans la position de charge (et donc de déconnexion du moteur) quand la prise mâle du réseau coopère avec la prise femelle du véhicule. En outre, le circuit de filtrage 82 ne se trouve pas à bord du véhicule mais dans une station de distribution d'énergie électrique symbolisée par le cadre 84.

L'invention n'est, bien entendu, pas limitée aux modes de réalisation décrits. En particulier, elle n'est pas limitée aux véhicules à traction hybride. Elle peut également être utilisée pour les véhicules à traction électrique.

## Revendications

1. Véhicule hybride comportant un moteur thermique (10), et une machine électrique (14) reliés à un arbre de roues du véhicule,
- la machine électrique (14) étant connectée électriquement à une batterie (16) de puissance par l'intermédiaire d'un circuit électronique (18) de puissance qui permet d'une part le transfert d'énergie de la batterie (16) vers la machine (14) fonctionnant en moteur et d'autre part, inversement, la charge de la batterie (16) quand la machine (14) fonctionne en générateur,
**caractérisé en ce qu'**il comporte en outre :
- des moyens pour charger la batterie (16) par une source d'énergie (46) électrique externe au véhicule d'une puissance permettant une charge rapide, de l'ordre d'une dizaine de minutes, et
- un commutateur (50, 51, 74, 80) relié à la batterie (16), ce commutateur (50, 51, 74, 80) présentant une première position pour laquelle la batterie (16) est reliée à la machine électrique (14), et
- une deuxième position pour laquelle la batterie (16) est reliée à la source (46) d'énergie externe, la connexion de la batterie (16) à la machine électrique (14) étant alors interrompue pour permettre l'isolation entre le circuit électronique de puissance et la machine électrique.

2. Véhicule selon la revendication 1, **caractérisé en ce que** :
- le commutateur (80) est solidaire d'une prise électrique se trouvant dans le véhicule et destinée à coopérer avec une prise complémentaire d'un réseau, le commutateur prenant automatiquement la seconde position quand la prise électrique du véhicule coopère avec la prise complémentaire du réseau.

3. Véhicule selon la revendication 1 ou 2, **caractérisé en ce que** les moyens pour charger la batterie (16) sont agencés pour permettre une charge par l'intermédiaire d'un réseau d'alimentation de type triphasé, par exemple du type à 380 volts.

4. Véhicule selon l'une des revendications 1 à 3, **caractérisé en ce qu'**il comporte des moyens pour charger la batterie (16) à une seconde puissance, sensiblement inférieure à la première.

5. Véhicule selon la revendication 4, **caractérisé en ce que** les moyens pour une charge à une seconde puissance sont tels qu'ils permettent la charge par l'intermédiaire d'un réseau d'alimentation de type monophasé.

6. Véhicule selon l'une des revendications précédentes, **caractérisé en ce que** les moyens pour charger la batterie (16) à l'aide d'une source externe comportent des moyens (64, 82) de filtrage pour isoler la source des parasites électromagnétiques engendrés à bord du véhicule.

7. Véhicule selon l'une des revendications précédentes, **caractérisé en ce que** les moyens pour charger la batterie (16) à l'aide d'une source (46) externe comportent des moyens (50) d'équilibrage des phases de la source d'alimentation.

8. Véhicule selon l'une des revendications précédentes, **caractérisé en ce qu'**il comporte un dispositif de commande à moyen (28) de calcul prévu pour déterminer automatiquement le mode de traction, à moteur thermique (10) et/ou à moteur électrique (14), en fonction de l'état de charge de la batterie (16) et du couple demandé au véhicule.

9. Véhicule selon la revendication 8, **caractérisé en ce que** les moyens pour charger la batterie comportent un moyen (70) fonctionnant en redresseur pour la charge et fonctionnant en onduleur quand la machine (14) fonctionne en moteur alimenté par la batterie.

10. Véhicule selon l'une des revendications 8 à 9, **caractérisé en ce que** le dispositif de commande (28₁) comporte un moyen supplémentaire de commande actionnable de l'intérieur du véhicule afin de permettre le choix à volonté du mode de traction.

11. Véhicule selon la revendication 10, **caractérisé en ce** le moyen supplémentaire de commande est relié au moyen (28) de calcul.

## Claims

1. Hybrid vehicle comprising an internal combustion engine (10) and an electric machine (14) connected to an axle of the vehicle,
- the electric machine (14) being connected electrically to a battery (16) by means of an electronic power circuit (18) which makes possible, on the one hand, the transfer of energy from the battery (16) to the machine (14) operating as a motor and, on the other hand, inversely, the charging of the battery (16) when the machine (14) operates as a generator, **characterized in that** it comprises in addition:
- means for charging the battery (16) by means of an electric power source (46) external to the vehicle, which has a power permitting rapid charging in ten minutes, and
- a switch (50, 51, 74, 80) connected to the battery (16), this switch (50, 51, 74, 80) having a first position in which the battery (16) is connected to the electric machine (14), and
- a second position in which the battery (16) is connected to the external power source (46), the connection between the battery (16) and the electric machine (14) being interrupted to allow isolation between the electronic power circuit and the electric machine.

2. Vehicle according to Claim 1, **characterized in that**:
- the switch (80) is made integrally in one piece with an electric socket located in the vehicle and intended to cooperate with a complementary socket of a network, the switch automatically assuming the second position when the electric socket of the vehicle cooperates with the complementary socket of the network.

3. Vehicle according to Claim 1 or 2, **characterized in that** the means for charging the battery (16) are arranged so as to permit charging by means of a three-phase supply network, for example of the 380 V type.

4. Vehicle according to any one of Claims 1 to 3, **characterized in that** it comprises means for charging the battery (16) with a second power that is substantially lower than the first one.

5. Vehicle according to Claim 4, **characterized in that** the means for charging with a second power are such that they permit charging by means of a supply network of the single-phase type.

6. Vehicle according to any one of the preceding claims, **characterized in that** the means for charging the battery (16) by means of an external source comprise filtering means (64, 82) for isolating the source from the electromagnetic interference generated onboard the vehicle.

7. Vehicle according to any one of the preceding claims, **characterized in that** the means for charging the battery (16) by means of an external source (46) comprise means (50) for balancing the phases of the power source.

8. Vehicle according to any one of the preceding claims, **characterized in that** it comprises a control device with calculation means (28) being provided for automatically determining the powering mode, with an internal combustion engine (10) and/or an electric motor (14), as a function of the state of charge of the battery (16) and the torque the vehicle is required to deliver.

9. Vehicle according to Claim 8, **characterized in that** the means for charging the battery comprise a means (70) acting as a rectifier for charging and acting as an inverter when the machine (14) is operating as a motor supplied by the battery.

10. Vehicle according to either of Claims 8 and 9, **characterized in that** the control device (28₁) comprises an additional control means that can be actuated inside the vehicle in order to make it possible to freely select the powering mode.

11. Vehicle according to Claim 10, **characterized in that** the additional control means is connected to the calculation means (28).

## Patentansprüche

1. Hybridfahrzeug, welches einen Verbrennungsmotor (10) und eine elektrische Maschine (14) umfasst, welche mit einer Radwelle des Fahrzeugs verbunden sind,
- wobei die elektrische Maschine (14) elektrisch mit einer Hochleistungs-Batterie (16) über einen elektronischen Hochleistungs-Schaltkreis (18) verbunden ist, welcher einerseits die Übertragung von Energie von der Batterie (16) zu der Maschine (14) bei Motor-Funktion und andererseits umgekehrt das Aufladen der Batterie (16), wenn die Maschine (14) als Generator funktioniert, ermöglicht, **gekennzeichnet dadurch, dass** es desweiteren umfasst:
- Mittel zum Laden der Batterie (16) durch eine in Bezug auf das Fahrzeug externe elektrische Energiequelle (46) mit einer zum schnellen Laden in der Größenordnung von etwa zehn Minuten ausreichenden Leistung, und
- einen Schalter (50, 51, 74, 80) welcher mit der Batterie (16) verbunden ist, wobei der Schalter (50, 51, 74, 80) eine erste Position aufweist, in welcher die Batterie (16) mit der elektrischen Maschine (14) verbunden ist, und
- eine zweite Position, in welcher die Batterie (16) mit der externen Energiequelle (46) verbunden ist, wobei die Verbindung der Batterie (16) mit der elektrischen Maschine (14) dann unterbrochen ist, um die Isolierung zwischen dem elektronischen Hochleistungsschaltkreis und der elektrischen Maschine zu ermöglichen.

2. Fahrzeug gemäß Anspruch 1, **gekennzeichnet dadurch, dass**:
- der Schalter (80) mit einem elektrischen Stecker verbunden ist, welcher sich in dem Fahrzeug befindet und welcher dafür bestimmt ist, mit einem komplementären Stecker eines Netzes zusammenzuwirken, wobei der Schalter automatisch die zweite Position einnimmt, wenn der elektrische Stecker des Fahrzeugs mit dem komplementären Stecker des Netzes zusammenwirkt.

3. Fahrzeug gemäß den Ansprüchen 1 oder 2, **gekennzeichnet dadurch, dass** die Mittel zum Laden der Batterie (16) eingerichtet sind, um das Laden mit Hilfe eines Dreiphasen-Versorgungsnetzes, zum Beispiel vom Typ 380 Volt, zu ermöglichen.

4. Fahrzeug gemäß einem der Ansprüche 1 bis 3, **gekennzeichnet dadurch, dass** es Mittel zum Laden der Batterie (16) mit einer zweiten Leistung umfasst, welche merklich kleiner als die erste ist.

5. Fahrzeug gemäß Anspruch 4, **gekennzeichnet dadurch, dass** die Mittel für das Laden mit einer zweiten Leistung das Laden mit Hilfe eines Einphasen-Versorgungsnetzes ermöglichen.

6. Fahrzeug gemäß einem der vorangegangenen Ansprüche, **gekennzeichnet dadurch, dass** die Mittel für das Laden der Batterie (16) mit Hilfe einer externen Quelle Filter-Mittel (64, 82) umfassen, um die Quelle von elektromagnetischen Parasiten, welche an Bord der Fahrzeugs verursacht wurden, isoliert.

7. Fahrzeug gemäß einem der vorangegangenen Ansprüche, **gekennzeichnet dadurch, dass** die Mittel für das Laden der Batterie (16) mit Hilfe einer externen Quelle (46) Angleichungs-Mittel (50) der Phasen an die Versorgungs-Quelle umfasst.

8. Fahrzeug gemäß einem der vorangegangenen Ansprüche, **gekennzeichnet dadurch, dass** es eine Steuerungs-Vorrichtung mit Berechnungs-Mitteln (28) umfasst, um automatisch den Antriebs-Modus, Verbrennungsmotor (10) und/oder elektrischer Motor (14), zu bestimmen, in Abhängigkeit vom Ladezustand der Batterie (16) und dem vom Fahrzeug geforderten Drehmoment.

9. Fahrzeug gemäß dem Anspruch 8, **gekennzeichnet dadurch, dass** die Mittel für das Laden der Batterie ein Mittel (70) umfassen, welches als Gleichrichter für das Laden arbeitet und als Wechselstromumrichter arbeitet, wenn die Maschine (14) als von der Batterie angetriebener Motor arbeitet.

10. Fahrzeug gemäß einem der Ansprüche 8 oder 9, **gekennzeichnet dadurch, dass** die Steuerungs-Vorrichtung (28₁) ein zusätzliches Steuerungs-Mittel umfasst, welches aus dem Inneren des Fahrzeugs betätigt werden kann, um die freie Wahl des Antriebs-Modus zu ermöglichen.

11. Fahrzeug gemäß dem Anspruch 10, **gekennzeichnet dadurch, dass** das zusätzliche Steuerungs-Mittel mit dem Berechnungs-Mittel (28) verbunden ist.
